# EUROPEAN PATENT APPLICATION

(11) **EP 4 589 965 A1**
(43) Date of publication of application: **23.07.2025**
(21) Application number: 23864714.3
(22) Date of filing: 13.09.2023
(51) Int. Cl.: H04N 21/432

(54) **LIVESTREAMING VIDEO PROCESSING METHOD AND APPARATUS, DEVICE, AND MEDIUM**

(30) Priority: 14.09.2022 CN 202211117921
(71) Applicant: Beijing Zitiao Network Technology Co., Ltd., Beijing 100190 (CN)
(72) Inventor: LIU, Zirui, Beijing 100028 (CN); WANG, Wenfeng, Beijing 100028 (CN)
(74) Representative: Dentons UK and Middle East LLP
(86) International application number: PCT/CN2023/118491
(87) International publication number: WO 2024/055982

(57) **Abstract**

The present disclosure discloses a livestreaming video processing method and apparatus, a device, and a medium. In a multi-livestreamer linkage scenario, a first livestreaming room interface corresponding to a first livestreamer is displayed, the first livestreaming room interface comprising a first display image corresponding to the first livestreamer and a second display image corresponding to a second livestreamer, and the second livestreamer being a livestreamer linked to the first livestreamer. In response to a trigger operation of the first livestreamer on a target display image in the first livestreaming room interface, the target display image is enlarged and displayed in the first livestreaming room interface. Thus, viewing by viewers in a first livestreaming room is facilitated.

## Description

The present application claims priority of the Chinese Patent Application No. 202211117921.7 filed on September 14, 2022, entitled "LIVESTREAMING VIDEO PROCESSING METHOD AND APPARATUS, DEVICE AND MEDIUM", the disclosure of which is incorporated herein by reference in its entirety as part of the present application.

### TECHNICAL FIELD

The present application relates to the field of computer technology, and in particular to a method and apparatus for processing livestreaming video, a device and a medium.

### BACKGROUND

With the continuous development of livestreaming technology, more and more users socialize through livestreaming. During the livestreaming process, multiple streamers may participate in live interactions through livestreaming methods or challenge methods. However, in the existing process of multiple streamers interacting through livestreaming methods, the display methods for the interactive interfaces are limited and unable to satisfy the diverse display needs, affecting the viewing experience.

### SUMMARY

In view of the above, embodiments of the present application provide a livestreaming video processing method and apparatus, a device and a medium.

To realize the above purposes, the present application provides the following technical solutions.

In the first aspect of the present application, a method for processing livestreaming video is provided, and the method includes:
displaying a first livestreaming room interface, the first livestreaming room interface displaying a first display image corresponding to a first streamer and a second display image corresponding to a second streamer respectively, the second streamer being a streamer that interacts with the first streamer;
enlarging, in response to a trigger operation of the first streamer on a target display image in the first livestreaming room interface, the target display image in the first livestreaming room interface, the target display image being the first display image or the second display image.

In the second aspect of the present application, an apparatus for processing livestreaming video is provided, and the device includes:
a first display unit, which is configured to display a first livestreaming room interface, the first livestreaming room interface displaying a first display image corresponding to a first streamer and a second display image corresponding to a second streamer respectively, the second streamer being a streamer that interacts with the first streamer;
a second display unit, which is configured to, in response to a trigger operation of the first streamer on a target display image in the first livestreaming room interface, enlarge the target display image in the first livestreaming room interface, the target display image being the first display image or the second display image.

In the third aspect of the present application, an electronic device is provided, and the device includes: a processor and a memory;
the memory is configured to store instructions or computer programs;
the processor is configured to execute the instructions or the computer programs in the memory to enable the electronic device to implement the method as described in the first aspect.

In the fourth aspect of the present application, a computer-readable storage medium is provided, the computer-readable storage medium stores instructions, and when the instructions are executed by the device, the device implements the method as described in the first aspect.

In the fifth aspect of the present application, a computer program product is provided, the computer program product including a computer program/instruction. The computer program/instruction, when executed by a processor, cause the processor to implement the method as described in the first aspect.

### BRIEF DESCRIPTION OF DRAWINGS

To more clearly illustrate the technical solutions in the embodiments or prior art of the present application, the following will briefly introduce the drawings that need to be used in the description of the embodiments or the prior art. It is obvious that the drawings in the following description are only some of the embodiments described in the present application, and for those skill in the art, other drawings can be obtained according to these drawings without creative labor.
Fig. 1 is a schematic diagram of a display of a livestreaming room provided by embodiments of the present application;
Fig. 2 is a flowchart of a method for processing livestreaming video provided by embodiments of the present application;
Fig. 3a is a schematic diagram of a display of enlarged image provided by embodiments of the present application;
Fig. 3b is a schematic diagram of a all-member enlargement provided by embodiments of the present application;
Fig. 4 is a schematic diagram of an operation panel provided by embodiments of the present application;
Fig. 5 is a schematic diagram of authority setting provided by embodiments of the present application;
Fig. 6 is a schematic diagram based on zoom-in instructions provided by embodiments of the present application;
Fig. 7 is a structural schematic diagram of an apparatus for processing livestreaming video provided by embodiments of the present application;
Fig. 8 is a structural schematic diagram of an electronic device provided by embodiments of the present application.

### DETAILED DESCRIPTION

To enable persons skilled in the art to better understand the embodiments of the present application, the technical solutions in the embodiments of the present application will be described clearly and completely in the following in conjunction with the drawings in the embodiments of the present application. It is obvious that the described embodiments are only a part of the embodiments of the present application, but not all of the embodiments. Based on the embodiments in the present application, all other embodiments obtained by persons skilled in the art without making creative labor fall within the scope of protection of the present application.

Currently, in a multi-streamer interaction scenario, when a certain streamer is performing during the live interaction, since the areas of the video streams correspond to all the streamers participating in the interaction are the same, the video stream of the performing streamer cannot be focused, which affects the viewing experience of the viewers. Herein, an area of a video stream corresponding to a streamer is the area of the display area of the video stream corresponding to the streamer in the livestreaming room interface.

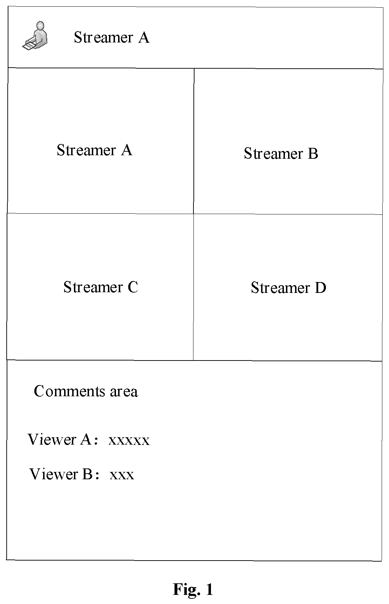

For example, in the schematic diagram of the livestreaming room interface shown in Fig. 1, there are 4 streamers in the livestreaming room in total, that is, Streamer A, Streamer B, Streamer C, and Streamer D, respectively. Hereinafter, the view of Streamer A is taken as an example. In the interaction scenario, each of the 4 streamers has the same area of the corresponding video stream. When Streamer B is performing, in the livestreaming room interface corresponding to Streamer A, the display image of Streamer B still occupies a smaller video stream area, which makes the viewers of the livestreaming room corresponding to Streamer A are not able to focus on the display image of Streamer B, which affects the viewing experience.

Based on the above, the present disclosure provides a method for processing livestreaming video. In the multi-streamer interaction scenario, for the first streamer participating in the interaction, displaying the livestreaming room interface corresponding to the first streamer, i.e., the first livestreaming room interface. The first livestreaming room interface displays the first display image corresponding to the first streamer and the second display image corresponding to the second streamer that interacts with the first streamer. When the first streamer triggers the corresponding operation on the target display image in the first livestreaming room interface, the target display image is enlarged in the first livestreaming room interface, which satisfies the need for flexible adjustment of the interface in the scenario where the streamers are interacting and thereby improves the user experience.

To facilitate the understanding of the technical solution provided by the embodiments of the present disclosure, the following will be described in conjunction with the drawings. The following description for the display information of the livestreaming room interface will take the view of the first user in the livestreaming room as an example.

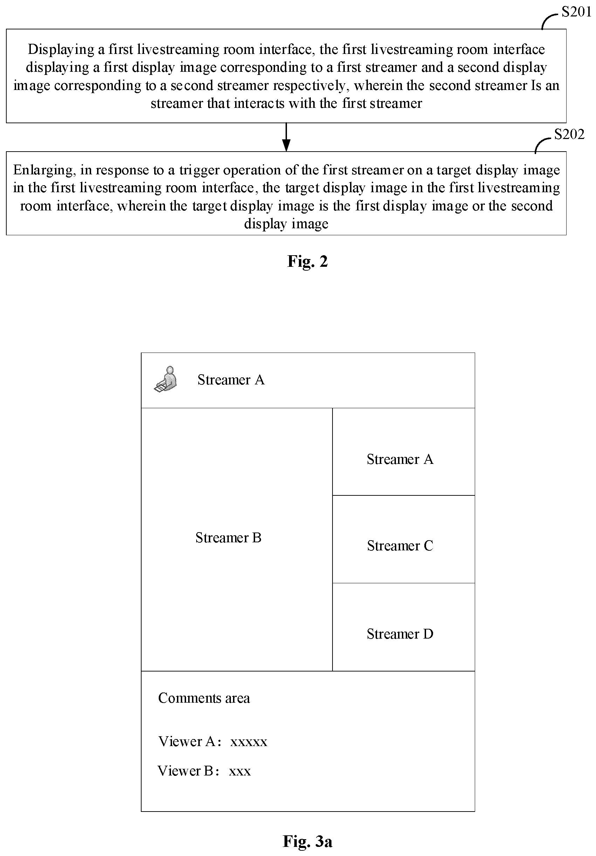

Referring Fig. 2, which shows a method for processing livestreaming video provided by embodiments of the present disclosure. The method may be executed by a livestreaming client. The livestreaming client corresponds to the first streamer, and may be installed on an electronic device. The electronic device may include a device with communication functions such as a cell phone, a tablet computer, a laptop computer, a desktop computer, a vehicle terminal, a wearable electronic device, an all-in-one computer, a smart home device, or a device simulated by a virtual machine or a simulator. As shown in Fig. 2, the method may include the steps as follows.

S201: displaying the first livestreaming room interface.

In the embodiment, when the first streamer and the second streamer initiate the interaction in the livestreaming room, the first livestreaming room interface including the first display image corresponding to the first streamer and the second display image corresponding to the second streamer is displayed. The first livestreaming room interface may be a microphone interactive livestreaming room interface, the first streamer may be an initiator/inviter of the interaction or an invitee of the interaction; and the second streamer may be an inviter of the linking or an invitee of the interaction. One inviter of the interaction and one or more invitees of the interaction may be present in the first livestreaming room interface.

S202: enlarging, in response to a trigger operation of the first streamer on a target display image in the first livestreaming room interface, the target display image in the first livestreaming room interface.

In the present embodiment, when the first streamer triggers a preset operation on the target display image in the first livestreaming room interface, the target display image is enlarged in the first livestreaming room interface. The target display image is the first display image or the second display image.

In this embodiment, when the first streamer is the inviter of the interaction, the target display image may be the first display image or the second display image. The trigger operation is the first trigger operation or the second trigger operation. The first triggering operation indicates to enlarge the target display image in the livestreaming room interfaces corresponding to all the streamers participating in the interaction, and the second trigger operation indicates to enlarge the target display image in the livestreaming room interface corresponding to the streamer that triggers the second trigger operation. That is, the first trigger operation is used to trigger all the participating livestreaming rooms to enlarge the target display image, that is, all-member enlargement; and the second triggering operation is used to trigger the user's own livestreaming room to enlarge the target display image, that is, an individual view enlargement.

Specifically, the inviter of the interaction may perform a second trigger operation on the display image corresponding to the streamers (including the inviter) participating in the interaction, thereby enabling the display image to be enlarged in the first livestreaming room interface, so as to facilitate viewers in the livestreaming room corresponding to the first streamer to focus on viewing the target display image, and to improve the viewing experience of the user.

For example, as shown in Fig. 3a, Streamer A is the inviter of the interaction, and Streamer B, Streamer C, and Streamer D are the invitees. When Streamer A triggers the operation on the display image corresponding to Streamer B, the display image of Streamer B will be enlarged in the livestreaming room corresponding to Streamer A.

In some embodiments, when the first streamer is the inviter of the interaction and the trigger operation is the first trigger operation, a zoom-in instruction will be sent to the server to cause the server to send a zoom-in instruction to the client corresponding to the second streamer, which in turn causes the client corresponding to the second streamer to enlarge the target display image according to the zoom-in instruction. That is, through the first trigger operation, not only the target display image in the first livestreaming room interface can be controlled to be enlarged, but also the livestreaming rooms corresponding to the other streamers participating in the interaction can be controlled to enlarge the target display image, thereby controlling the livestreaming room interfaces corresponding to all the participating streamers to uniformly enlarge the target display image.

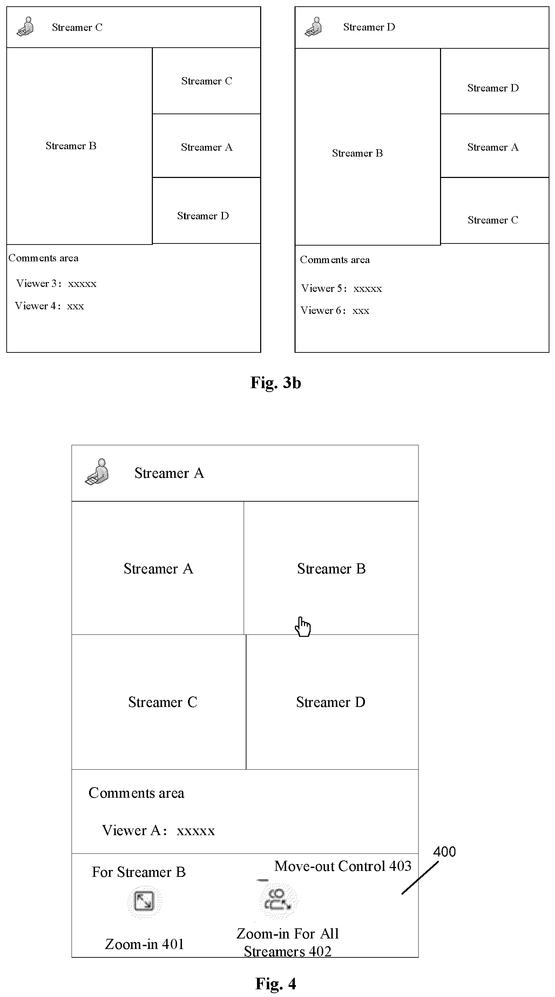

For example, as shown in Fig. 3b, when Streamer A triggers an all-member enlargement operation on the display image of Streamer B, the livestreaming room corresponding to Streamer A enlarges the display image of Streamer B, and at the same time sends a zoom-in instruction to the server. The server sends a zoom-in instruction to the clients of Streamer B, Streamer C, and Streamer D, respectively. The clients of Streamer B, Streamer C, and Streamer D all enlarge the display image of Streamer B upon receiving the zoom-in instruction.

In some embodiments, when the first streamer is the invitee of the interaction, the target display image is the first display image, and the trigger operation on the target display image is the second trigger operation, i.e., when the first streamer is the invitee of the interaction, the first streamer may enlarge its own display image. For example, in the disclosure scenario shown in Fig. 1, Streamer A is the inviter of the interaction, and Streamer B, Streamer C, and Streamer D are the invitees of the interaction. In this example, these three invitees may trigger the enlargement of the display image corresponding to themselves in their own livestreaming rooms, and may not trigger the enlargement of the display images corresponding to the other streamers.

In some embodiments, regardless of whether the first streamer is the inviter or the invitee of the interaction, when the trigger operation is the second trigger operation, only the target display image in the first livestreaming room interface is enlarged, and the target display images in the livestreaming rooms corresponding to the other streamers participating in the interaction are not enlarged. For example, the first streamer is Streamer B in Fig. 1, and when Streamer B performs the second trigger operation on the display image corresponding to itself, the display image of Streamer B is enlarged in the livestreaming room corresponding to Streamer B, while the display image of Streamer B in the livestreaming rooms corresponding to each of Streamers A, C, and D is still displayed in the manner of Fig. 1 and is not enlarged.

Specifically, when the first streamer is the inviter of the interaction, in response to a trigger operation of the first streamer on the target display image in the first livestreaming room interface, an operation panel will be displayed. The operation panel includes the first control and the second control. In response to the trigger operation of the first streamer on the first control or the second control, the target display image is enlarged in the first livestreaming room interface. The first trigger operation is a trigger operation for the first control, and the second trigger operation is a trigger operation for the second control. In the present embodiment, the first streamer may trigger one of the first and second controls according to its need to enlarge the target display image. For example, in the schematic diagram shown in Fig. 4, when Streamer A performs a click operation on the display image of Streamer B, the operation panel 400 for Streamer B may be displayed. The operation panel 400 may include the individual view enlargement control 401 (the second control) and the all-member enlargement control 402 (the first control), and icons corresponding to each of the controls may also be displayed. In addition, other controls may be displayed on the operation panel, such as a focus control (for focusing on a certain streamer participating in the interaction), a mute control (for controlling a certain streamer to be in a mute state), and the like.

In other words, when the inviter of the interaction clicks on the all-member enlargement control for anyone of the streamers, the enlarged layout interface corresponding to any of the streamers is displayed in all of the livestreaming rooms participating in the live streaming. That is, the viewers in all of the livestreaming rooms participating in the livestreaming can see the enlarged layout interface corresponding to aforesaid anyone of the streamers. When the inviter of the interaction or the invitee of the interaction clicks on the individual view enlargement control, the enlarged layout interface is displayed only in the livestreaming room of the streamer who clicked on the view enlargement control, that is, it is effective only for its own livestreaming room, so as to avoid affecting the interfaces of other livestreaming rooms.

When the first streamer is the invitee of the interaction, in response to the first streamer triggering the target display image in the first livestreaming room interface, an operation panel is displayed. The operation panel includes the second control. In response to the first streamer triggering the second control, the target display image is enlarged in the first livestreaming room interface. That is, when the first streamer is the invitee of the interaction, only its own display image may be enlarged so as to avoid affecting other livestreaming room interfaces.

In the above example, to avoid enlarging two display images at the same time and distracting the attention of the viewer, when the first streamer triggers the first trigger operation or the second trigger operation on another display image (a certain display image in the first livestreaming room interface in addition to the target display image), the another display image will be enlarged in the first livestreaming room interface, and enlargement of the previously enlarged display of the target image will be canceled. That is, only one video stream can be enlarged and displayed at the same time.

In some embodiments, to facilitate the inviter of the interaction to manage the interaction scenario, the inviter may also be given the authority to move the invitees out of the interaction. Specifically, when the first streamer is the inviter of the interaction, in response to the third trigger operation by the first streamer on the second display image, canceling the display of the second display image in the first livestreaming room interface. That is, the first streamer has the control authority on the interaction initiated by itself so as to move part of the participants out of the interaction in time based on its demand. For example, the operation panel shown in Fig. 4 may also include the move-out control 403 that can move Streamer B out of the interaction in response to Streamer A triggering the move-out control 403.

In some embodiments, in order to maintain the stability of the interaction, the inviter of the interaction can also control the interaction authority of the invited streamer. Specifically, when the first streamer is the inviter of the interaction, in response to the first streamer triggering a setting operation in the first livestreaming room interface, a setting result is sent to the server to cause the server to control the interaction authority of the second streamer based on the setting result. The interaction authority includes an authority for sending the interaction invitations in the livestreaming room and/or an authority for receiving the interaction requests in the livestreaming room. The livestreaming room involves in the interaction authority is the livestreaming room initiated by the first streamer.

Specifically, when the first streamer opens the authority for sending invitations of the interaction in the livestreaming room to the participants, the participants may send interaction invitations to other streamers who have not yet participated in the interaction so as to invite more streamers to participate in the interaction. Alternatively, when the first streamer opens the authority for receiving the interaction requests in the livestreaming room to the participants, the participants may receive interaction requests from the other streamers who have not yet participated in the interaction, and the client of the participants, in turn, forward the interaction requests to the client of the first streamer in order to have the first streamer confirm whether or not to allow participate join the interaction.

Specifically, in response to the first streamer triggering a setting operation in the first streamer room interface, a setting panel is displayed. The setting panel includes the third control and the fourth control. The third control is used to set the authority for sending interaction invitations in the livestreaming room, and the fourth control is used to set the authority for receiving interaction requests in the livestreaming room. In response to the first streamer triggering the third control and/or the fourth control, the setting result is sent to the server.

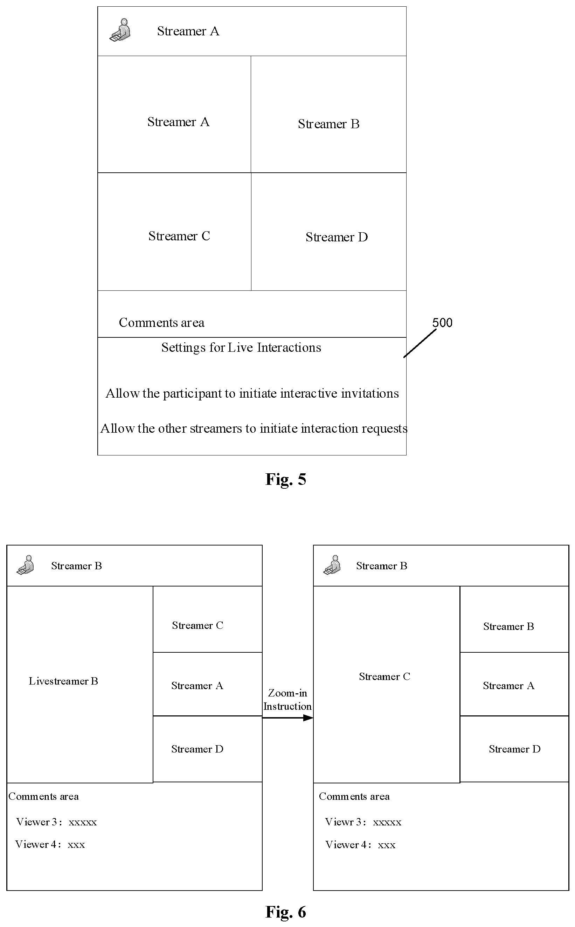

Referring to the schematic diagram of a setting authority shown in Fig. 5, when Streamer A triggers the setting authority operation in the livestreaming room, the setting panel 500 is displayed. The setting panel 500 includes an option for allowing the participant to initiate the interaction invitation and an option for allowing the other streamers to initiate the interaction requests, and Streamer A may set any one of the options.

When the first streamer is the invitee of the interaction and has the authority to send the interaction invitation in the livestreaming room, in response to the sending operation triggered by the first streamer in the first livestreaming interface, the interaction invitation is sent to the client of the third streamer. When the first streamer is the invitee of the interaction and has the authority for sending interaction invitations in the livestreaming room, then the first streamer receives the interaction request sent by the client of the fourth streamer.

In some embodiments, when the first streamer is the invitee of the interaction and the target display image is the first display image, and when the client corresponding to the inviter of the interaction sends a zoom-in instruction for the second display image, the second display image is enlarged in the first livestreaming room interface. That is, when the client corresponding to the inviter of the interaction sends the zoom-in instruction for the second display image, the zoom-in instruction is sent to the server so that the server sends the zoom-in instruction to the client of the first streamer so that the client of the first streamer enlarges the second display image according to the zoom-in instruction.

In the above example, when the client of the first streamer is performing the enlarged display of the second display image according to the zoom-in instruction, the previously enlarged display of the first display image is canceled. That is, the enlargement priority triggered by the inviter is higher than the enlargement priority triggered by the invitee.

For example, as shown in Fig. 6, when Streamer B (the invitee) enlarges its own display image, and receives the zoom-in instruction for the display image of Streamer C sent by the client of Streamer A (the inviter) forwarded by the server, the client of Streamer B cancels the enlarged display of its own display image and performs an enlargement process on the display image of Streamer C.

As can be seen, in the multi-streamer interaction scenario, the first livestreaming room interface corresponding to the first streamer is displayed, and the first livestreaming room interface includes the first display image corresponding to the first streamer and the second display image corresponding to the second streamer. The second streamer is a streamer that interacts with the first streamer. In response to a trigger operation of the first streamer on the target image in the first livestreaming interface, the target display image is enlarged in the first livestreaming room interface, thereby facilitating viewing by viewers of the first livestreaming room. In this way, with the technical solution provided by the present disclosure, in the streamer-streamer interaction scenario, any of the streamers participating in the interaction can enlarge the display image of the livestreaming room, causing the display image to be displayed in a focused manner, which satisfies the need for flexible adjustment of the screen in an interface where the streamer interacts with the streamer and improves the user experience.

Based on the above embodiments for the method, the present disclosure embodiments provide a device and an apparatus for processing livestreaming video, which will be described below in conjunction with the drawings.

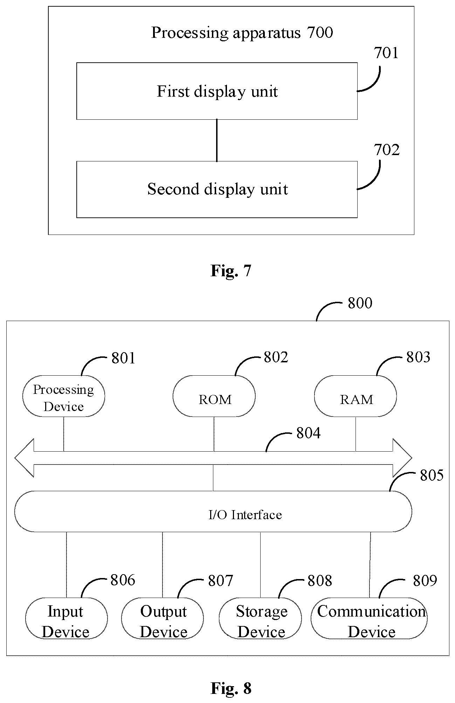

Referring to Fig. 7, which shows a structural schematic diagram of an apparatus for processing livestreaming video provided by embodiments of the present disclosure. As shown in Fig. 7, the device includes the first display unit 701 and the second display unit 702.

The first display unit 701 is configured to display the first livestreaming room interface. The first livestreaming room interface displays the first display image corresponding to the first streamer and the second display image corresponding to the second streamer respectively. The second streamer is a streamer that interacts with the first streamer.

The second display unit 702 is configured to enlarge the target display image in the first livestreaming room interface in response to a trigger operation of the first streamer on the target display image in the first livestreaming room interface. The target display image is the first display image or the second display image.

In an embodiment of the present disclosure, when the first streamer is the inviter of a interaction, the target display image is the first display image or the second display image, and the trigger operation is the first trigger operation or the second trigger operation. The first trigger operation indicates to enlarge the target display image in livestreaming room interfaces corresponding to all streamers participating in the interaction respectively, and the second trigger operation indicates to enlarge the target display image in a livestreaming room interface corresponding to the streamer that triggers the second trigger operation.

When the first streamer is the invitee of the interaction, the target display image is the first display image and the trigger operation is the second trigger operation.

In an embodiment of the present disclosure, the device further includes a sending unit.

The sending unit is configured to send a zoom-in instruction to a server when the trigger operation is the first trigger operation, so as to cause the server to send the zoom-in instruction to a client corresponding to the second streamer, which in turn causes the client corresponding to the second streamer to enlarge the target display image according to the zoom-in instruction.

In an embodiment of the present disclosure, the second display unit 702, is specifically configured to display an operation panel in response to a trigger of the target display image in the first livestreaming room interface by the first streamer when the first streamer is the inviter of the interaction. The operation panel includes the first control and the second control. The first trigger operation is a trigger operation for the first control, and the second trigger operation is a trigger operation for the second control. In response to the trigger operation of the first streamer for the first control or the second control, the target display image is enlarged in the first livestreaming room interface. Or, when the first streamer is an invitee of a interaction, an operation panel is displayed in response to the trigger of the first streamer for the target display image in the first livestreaming room interface. The operation panel includes the second control. In response to a trigger operation of the second control by the first streamer, the target display image is enlarged in the first livestreaming room interface.

In an embodiment of the present disclosure, when the first streamer is the inviter of the interaction, the device further includes a sending unit.

The sending unit is configured to send a setting result to a server in response to a setting operation triggered by the first streamer in the first livestreaming room interface, so as to cause the server to control the interaction authority of the second streamer based on the setting result. The interaction authority includes an authority for sending interaction invitations in the livestreaming room and/or an authority for receiving interaction requests in the livestreaming room. The livestreaming room is initiated by the first streamer.

In an embodiment of the present disclosure, when the first streamer is the inviter of the interaction, the device further includes a processing unit.

The processing unit is configured to cancel the display of the second display image in the first livestreaming room interface in response to the third trigger operation of the second display image by the first streamer.

In an embodiment of the present disclosure, when the first streamer is the invitee of the interaction and the target display image is the first display image, the device further includes a third display unit.

The third display unit is configured to enlarge the second display image in the first livestreaming room interface when the client corresponding to the inviter of the interaction sends the zoom-in instruction for the second display image.

In an embodiment of the present disclosure, the device further includes a processing unit.

The processing unit is configured to cancel the enlarged display of the first display image in the first livestreaming room interface.

It should be noted that the specific implementation of each unit in the embodiment can be found in the relevant description in the embodiments for the method described above. The division of the units in the embodiments of the present disclosure is schematic and is only a logical functional division, and there may be another division when actually realized. Each functional unit in the embodiments of the present disclosure may be integrated into one processing unit, or each unit may exist physically separately, or two or more units may be integrated into a single unit. For example, in the above embodiment, the processing unit and the sending unit may be the same unit or different units. The above-described integrated unit may be realized either in the form of hardware or in the form of a software functional unit.

Referring to Fig. 8, which shows a structural schematic diagram of the electronic device 800 applicable for implementing the embodiments of the present disclosure. Terminal devices in the embodiments of the present disclosure may include, but are not limited to, mobile terminals such as mobile telephones, laptop computers, digital broadcast receivers, PDAs (personal digital assistants), PADs (tablet computers), PMPs (portable multimedia players), in-vehicle terminals (e.g., in-vehicle navigation terminals), and the like, as well as fixed terminals such as digital TVs, desktop computers, and the like. The electronic device illustrated in Fig. 8 is merely an example and should not impose any limitation on the functions and scope of use of the embodiments of the present disclosure.

As shown in Fig. 8, the electronic device 800 may include the processing device (e.g., a central processor unit, a graphics processor unit, and the like) 801, which may perform a plurality of appropriate actions and processes according to the program stored in the read-only memory (ROM) 802 or the program loaded from the storage device 808 into the random-access memory (RAM) 803. Also stored in the RAM 803 are a plurality of programs and data necessary for the operation of the electronic device 800. The processing device 801, the ROM 802, and the RAM 803 are connected via the bus 804. The input/output (I/O) interface 805 is also connected to the bus 804.

Typically, the following devices may be connected to the I/O interface 805: the input device 806 including, for example, a touch screen, a touchpad, a keyboard, a mouse, a camera, a microphone, an accelerometer, a gyroscope, and the like; an output device 807 including, for example, a liquid crystal display (LCD), a loudspeaker, a vibrator, and the like; a storage device 808 including, for example, a magnetic tape, a hard disk, and the like; and a communication device 809. The communication device 809 may allow the electronic device 800 to wireless or wired communicate with other devices to exchange data. While Fig. 8 illustrates the electronic device 800 with a plurality of devices, it should be understood that it is not required to implement or have all of the illustrated devices. More or fewer devices may alternatively be implemented or possessed.

In particular, according to the embodiments of the present disclosure, the process described above regarding the flowchart may be implemented as a computer software program. For example, the embodiments of the present disclosure include a computer program product. The program product includes a computer program carried on a non-transitory computer-readable medium, and the computer program includes program code for performing the method shown in the flowchart. In such embodiments, the computer program may be downloaded and installed from a network via the communication device 809, or from the storage device 808, or from the ROM 802. When the computer program is executed by the processing device 801, the above functions defined in the method of the embodiments of the present disclosure are performed.

The electronic device provided by the embodiments of the present disclosure belongs to the same inventive concept as the method provided by the embodiments described above, and the technical details not exhaustively described in the present embodiments may be found in the embodiments described above, and the present embodiments and the embodiments described above have the same beneficial effect.

The embodiments of the present disclosure provide a computer storage medium on which a computer program is stored, which the program when executed by the processor implements the method provided by the above embodiments.

It is noted that the computer-readable medium described above in the present disclosure may be a computer-readable signal medium or a computer-readable storage medium or any combination of the above. The computer-readable storage medium may be, for example, but is not limited to, a system, device, or apparatus of electricity, magnetism, light, electromagnetism, infrared, semiconductors, or any combination of the above. More specific examples of computer-readable storage media may include but are not limited to electrical interactions having one or more wires, portable computer disks, hard disks, random access memory (RAM), read-only memory (ROM), erasable programmable read-only memory (EPROM or flash memory), optical fibers, portable compact disk read-only memories (CD-ROM), optical storage devices, magnetic memory device, or any suitable combination of the foregoing. In the context of the present disclosure, a computer-readable storage medium may be any tangible medium containing or storing a program that may be used by or in combination with an instruction execution system, apparatus, or device. In the context of the present disclosure, a computer-readable signal medium may include a data signal propagated in a baseband or as part of a carrier wave that carries computer-readable program code. Such propagated data signals may take a plurality of forms, including, but not limited to, electromagnetic signals, optical signals, or any suitable combination of the foregoing. The computer-readable signal medium may also be any computer-readable medium other than a computer-readable storage medium that sends, propagates, or transmits a program for use by, or in combination with, an instruction-executing system, apparatus, or device. The program code included in the computer-readable medium may be transmitted by any suitable medium, including, but not limited to: wire, fiber optic cable, RF (radio frequency), and the like, or any suitable combination of the foregoing.

In some implementations, the client, and the server may communicate through any currently known or future-developed network protocol such as HTTP (Hyper Text Transfer Protocol) or the like and may be interconnected with digital data communications (e.g., communication networks) of any form or medium. Examples of communication networks include local area network (LAN), wide area network (WAN), inter-networks (e.g., the Internet), and end-to-end networks (e.g., ad hoc end-to-end networks), as well as any currently known or future-developed networks.

The computer-readable medium may be included in the electronic device; or it may be separate and not assembled into the electronic device.

The computer-readable medium carries one or more programs that, when the one or more programs are executed by the electronic device, enable the electronic device to implement the method.

The computer program code for implementing the operations of the present disclosure may be written in one or more programming languages, or combinations thereof, including, but not limited to, object-oriented programming languages, such as Java, Smalltalk, C++, and conventional procedural programming languages, such as the "C" language or similar programming languages. The program code may be executed entirely on the user's computer, partially on the user's computer, as a stand-alone software package, partially on the user's computer and partially on a remote computer, or entirely on a remote computer or server. In the case involving a remote computer, the remote computer may be connected to the user computer via any kind of network including a local area network (LAN) or a wide area network (WAN) or, alternatively, it may be connected to an external computer (e.g., by an Internet service provider to communicate via the Internet).

The flowcharts and the block diagrams in the drawings illustrate the architecture, functionality, and operation of systems, methods, and computer program products that a plurality of the embodiments of the present disclosure may implement. At this point, each box in the flowcharts or block diagrams may represent a module, program segment, or portion of code that includes one or more executable instructions for implementing a specified logical function. It should also be noted that in some implementations as replacements, the functions labeled in the boxes may also occur in a different order than those labeled in the drawings. For example, two consecutively boxes may actually be executed substantially in parallel, and they may sometimes be executed in reverse order, depending on the function involved. It is also noted that each of the boxes in the block diagram and/or flowchart, and combinations of the boxes in the block diagram and/or flowchart, may be implemented with a specialized hardware-based system that performs the specified function or operation, or may be implemented with a combination of specialized hardware and computer instructions.

The units described as being involved in embodiments of the present disclosure may be implemented by way of software or may be implemented by way of hardware. Wherein, the name of the unit/module does not constitute a limitation of the unit itself in a particular case.

The functions described above herein may be performed, at least in part, by one or more hardware logic components. For example, non-limitingly, exemplary types of hardware logic components that may be used include field programmable gate arrays (FPGAs), application-specific integrated circuits (ASICs), application-specific standard products (ASSPs), systems-on-chip (SOCs), complex programmable logic devices (CPLDs), and the like.

In the context of the present disclosure, a machine-readable medium may be a tangible medium, which may include or store a program for use by or in conjunction with an instruction execution system, device, or apparatus. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination of the foregoing. More specific examples of machine-readable storage media would include electrical interactions based on one or more wires, portable computer disks, hard disks, random access memory (RAM), read-only memory (ROM), erasable programmable read-only memory (EPROM or flash memory), optical fibers, convenient compact disk read-only memory (CD-ROM), optical storage devices, magnetic storage devices, or any suitable combination of the foregoing. any suitable combination of the above.

It should be noted that each embodiment in the specification is described in a progressive manner, and each embodiment focuses on the differences with other embodiments, and each embodiment can be referred to each other for the same and similar parts. For the system or device disclosed in the embodiments, since it corresponds to the method disclosed in the embodiments, the description is relatively simple, and it is sufficient to refer to the method portion of the description for the relevant points.

It should be understood that in the disclosure, "at least one (item)" means one or more, and "more than one" means two or more. "and/or" is used to describe an association relationship of the associated objects, indicating that three kinds of relationships may exist, for example, 'A and/or B' may indicate: only A exists, only B exists, and both A and B exist, wherein A and B may be singular or plural. B, where A and B can be singular or plural. The character "/" generally indicates an "or" relationship. The expression "at least one of the following" or its equivalent refers to any combination of these items, including any combination of singular or plural items. For example, at least one (one) of a, b, or c may be expressed as: "a, b, c", "a and b", "a and c", "b and c", or "a and b and c", wherein a, b, c may be single or multiple.

It is also noted that, in the specification, relational terms such as first and second are used only to distinguish one entity or operation from another, and do not necessarily require or imply the existence of any such actual relationship or order between these entities or operations. Furthermore, the terms "including", "comprising" or any other variant thereof are intended to cover non-exclusive inclusion, so that a process, method, object or device that includes a set of elements includes not only those elements but also other elements that are not explicitly listed, or that are inherent to such a process, method, object or device. Without further limitation, the fact that an element is defined by the phrase "including a ......" does not preclude the existence of another identical element in the process, method, object, or device that includes the element.

The steps of the method or algorithm described in interaction with the embodiments disclosed herein may be implemented directly in hardware, in a software module executed by a processor, or in a combination of both. The software modules may be placed in random memory (RAM), memory, read-only memory (ROM), electrically programmable ROM, electrically erasable programmable ROM, registers, hard disks, removable disks, CD-ROMs, or any other form of storage mediums known in the art.

The foregoing description of the disclosed embodiments enables those skilled in the art to implement or utilize the present disclosure. The plurality of modifications to these embodiments will be apparent to those skilled in the art, and the general principles defined herein may be implemented in other embodiments without departing from the spirit or scope of this disclosure. Accordingly, the present disclosure will not be limited to these embodiments shown herein, but will be subject to the broadest scope consistent with the principles and novel features disclosed herein.

## Claims

1. A method for processing livestreaming video, comprising:
displaying a first livestreaming room interface, the first livestreaming room interface displaying a first display image corresponding to a first streamer and a second display image corresponding to a second streamer respectively, the second streamer being a streamer that interacts with the first streamer;
enlarging, in response to a trigger operation of the first streamer on a target display image in the first livestreaming room interface, the target display image in the first livestreaming room interface, wherein the target display image is the first display image or the second display image.

2. The method according to claim 1, wherein,
when the first streamer is an inviter of an interaction, the target display image is the first display image or the second display image, the trigger operation is a first trigger operation or a second trigger operation, the first trigger operation indicates to enlarge the target display image in livestreaming room interfaces corresponding to all streamers participating in the interaction respectively, and the second trigger operation indicates to enlarge the target display image in a livestreaming room interface corresponding to a streamer that triggers the second trigger operation;
when the first streamer is an invitee of the interaction, the target display image is the first display image and the trigger operation is the second trigger operation.

3. The method according to claim 2, further comprising:
sending, in response to the trigger operation being the first trigger operation, a zoom-in instruction to a server so that the server sends the zoom-in instruction to a client corresponding to the second streamer, and the client corresponding to the second streamer enlarges the target display image according to the zoom-in instruction.

4. The method according to claim 2 or 3, wherein, in response to a trigger operation of the first streamer on a target display image in the first livestreaming room interface, enlarging the target display image in the first livestreaming room interface, comprising one or more of the followings:
when the first streamer is the inviter of the interaction, displaying an operation panel in response to the trigger operation of the first streamer on the target display image in the first livestreaming room interface, the operation panel comprising a first control and a second control, the first trigger operation being a trigger operation on the first control, and the second trigger operation being a trigger operation on the second control; and in response to a trigger operation of the first streamer on the first control or the second control, enlarging the target display image in the first livestreaming room interface;
when the first streamer is the invitee of the interaction, displaying an operation panel in response to the trigger operation of the first streamer on the target display image in the first livestreaming room interface, the operation panel comprising the second control; and in response to a trigger operation of the first streamer on the second control, enlarging the target display image in the first livestreaming room interface.

5. The method according to claim 1, wherein when the first streamer is the inviter of the interaction, the method further comprises:
sending, in response to a setting operation triggered by the first streamer in the first livestreaming room interface, a setting result to the server so that the server controls an interaction authority of the second streamer according to the setting result, the interaction authority comprising an authority for sending livestreaming room interaction invitations and/or an authority for receiving livestreaming room interaction requests, and wherein the livestreaming room is initiated by the first streamer.

6. The method according to claim 1, wherein when the first streamer is the inviter of the interaction, the method further comprises:
canceling, in response to a third trigger operation of the first streamer on the second display image, a display of the second display image in the first livestreaming room interface.

7. The method according to claim 1, wherein when the first streamer is the invitee of the interaction, the method further comprises:
when a client corresponding to an inviter of the interaction sends a zoom-in instruction for the second display image, enlarging the second display image in the first livestreaming room interface.

8. The method according to claim 7, further comprising:
canceling an enlarged display of the first display image in the first livestreaming room interface.

9. An apparatus for processing livestreaming video, comprising:
a first display unit, configured to display a first livestreaming room interface, the first livestreaming room interface displaying a first display image corresponding to a first streamer and a second display image corresponding to a second streamer respectively, the second streamer being a streamer that interacts with the first streamer;
a second display unit, configured to, in response to a trigger operation of the first streamer on a target display image in the first livestreaming room interface, enlarge the target display image in the first livestreaming room interface, wherein the target display image is the first display image or the second display image.

10. An electronic device, comprising:
a processor; and
a memory,
wherein the memory is configured to store instructions or computer programs;
wherein the processor is configured to execute the instructions or the computer programs in the memory to enable the electronic device to implement the method according to any one of claims 1-8.

11. A computer-readable storage medium, the computer-readable storage medium stores instructions, when the instructions are executed by a device, the device implements the method according to any one of claims 1-8.
